# FASCICULE DE BREVET EUROPEEN

(11) **EP 0 521 397 B1**
(45) Date de publication et mention de la délivrance du brevet: **08.05.1996**
(21) Numéro de dépôt: 92110755.3
(22) Date de dépôt: 25.06.1992
(51) Int. Cl.: A47J 31/40

(54) **Dispositif d'extraction de cartouches**
Gerät zum Extrahieren von Kartuschen
Device for extracting cartridges

(30) Priorité: 05.07.1991 EP 91111212
(43) Date de publication de la demande: 07.01.1993
(73) Titulaire: SOCIETE DES PRODUITS NESTLE S.A., CH-1800 Vevey (CH)
(72) Inventeur: Fond, Olivier, CH-1400 Yverdon (CH); Yoakim, Alfred, CH-1814 La Tour de Peilz (CH)

(56) Documents cités:
- EP-A- 0 070 403
- CH-A- 605 293
- DE-U- 7 430 109
- DE-U- 8 908 315
- FR-A- 1 566 089
- US-A- 2 899 886

## Description

L'invention concerne un dispositif d'extraction de cartouches contenant une substance pour la préparation d'une boisson prévu pour être monté sur une tête d'extraction d'une machine espresso classique.

L'usage ordinaire des machines à café espresso correspond à l'extraction de café moulu qui a été dosé et disposé préalablement dans un filtre métallique maintenu dans une cuillère.

La partie supérieure des machines à café de type espresso est composée d'une douche permettant l'arrosage du café, d'une bague de serrage pour la fixation de la cuillère et d'un joint de caoutchouc assurant l'étanchéité et une bonne extraction en forçant le passage de l'eau à travers le lit de café.

Néanmoins, l'utilisation est fastidieuse, source de souillures et de frustration car la qualité de la boisson obtenue n'est pas toujours à la hauteur des espérances. Il est, en effet, difficile de doser correctement le café et de trouver sa bonne mouture.

L'emploi de capsules de café, par exemple celles faisant l'objet du brevet CH 605293, est une bonne alternative car les manipulations sont simplifiées, la qualité du café est meilleure et constante et les risques de salissures sont réduits. Néanmoins, l'utilisation de capsules de café exige une parfaite adéquation entre la capsule et le dispositif d'extraction, essentiellement pour des questions d'étanchéité et afin de forcer le passage de l'eau à travers le lit de café.

Cette adaptation peut être prévue dès la construction de la machine; elle est alors définitive et dans ce cas, la machine ne permet en général d'employer que des capsules. Le dispositif ne prévoit pas des éléments saillants dans la partie inférieure du porte-cartouche ni un moyen de fixation secondaire.

Le brevet EP 70403 concerne une machine espresso avec adaptateur pour l'extraction de cartouches ouvertes en papier filtre dont l'étanchéité est assurée dans sa partie médiane. Ce système est cependant restrictif à un type de capsule, dont la production est difficile.

Le système ne prévoit pas des éléments saillants et un moyen de fixation secondaire.

L'invention concerne un dispositif adaptable de manière semi-temporaire sur la plupart des machines à café espresso pour l'extraction de cartouches.
l'invention concerne un dispositif d'extraction de cartouches fermées tel que mentionné dans la revendication 1.

L'invention concerne un dispositif d'extraction de cartouches contenant une substance pour la préparation d'une boisson prévu pour être monté sur une tête d'extraction comprenant un système d'injection primaire d'eau, une bague de serrage primaire avec des rampes de serrage coaxiales avec le système d'injection d'eau et un joint d'étanchéité entourant le système d'injection d'eau et surélevé par rapport à celui-ci; ledit dispositif comprend un moyen de fixation secondaire, un porte-cartouche et un organe d'injection d'eau secondaire, ledit moyen de fixation secondaire comportant sur l'extérieur des pattes de serrage prévues pour s'engager sur les rampes de serrage de la bague de serrage primaire, sur l'intérieur une bague de serrage secondaire présentant des rampes de serrage sur lesquelles s'engagent les pattes de fixation du porte-cartouche et sur le haut une couronne circulaire s'appuyant contre le joint d'étanchéité, le moyen de fixation secondaire et le porte-cartouche ménageant entre eux une cavité destinée à recevoir la cartouche à extraire, cette cavité étant intégralement assurée par l'une ou l'autre pièce et l'étanchéité étant assurée soit sur le rebord de la face supérieure, soit sur le rebord de la face inférieure de ladite cartouche.

La cartouche est remplie d'une substance pour la préparation d'une boisson. Cette substance est de préférence du café torréfié et moulu, mais peut être aussi du thé, du café soluble, un mélange de café moulu et du café soluble ou un produit chocolaté, ou un potage déshydraté.

La cartouche utilisée dans le dispositif selon l'invention peut être celle faisant l'objet de la demande de brevet européen déposée par la demanderesse sous le No. 91107650.3. On peut aussi utiliser les capsules faisant l'objet des demandes de brevet EP No. 90114404.8 et 90114405.5.

La cartouche utilisée peut aussi être choisie parmi celles faisant l'objet des demandes de brevet européen déposées par la demanderesse, le même jour que la présente demande, sous les titres "Emballage rigide et procédé de fabrication" (EP 91111213.4), "Emballage souple avec élément rigidifiant et procédé de fabrication" (EP 91111214.2) et "Emballage souple ouvert et procédé de fabrication" (EP 91111209.2). Elle a de préférence un diamètre compris entre 2.5 et 6 cm et une épaisseur de lit de café comprise entre 10 et 25 mm.

Le système d'injection d'eau primaire est toujours constitué par une grille de répartition d'eau maintenue par une vis creuse.

Quand on utilise des capsules fermées dont la qualité réside dans le fait qu'elles s'ouvre automatiquement au moment de l'extraction, simplifiant à l'extrême les manipulations et assurant la qualité ultime par protection du café contre l'oxygène jusqu'au dernier instant avant l'extraction, il faut bien mettre en place le dispositif qui assurera cette ouverture. L'ouverture doit être double: sur la face supérieure afin de permettre l'introduction d'eau et sur la face inférieure pour assurer l'évacuation du café extrait.

La première solution consiste à prévoir un système d'injection d'eau primaire constitué par une grille de répartition d'eau maintenue par tout moyen connu tel qu'une vis et un organe d'injection d'eau secondaire constitué par une grille de répartition d'eau avec des éléments saillants coaxiale par rapport à la vis ou une simple ouverture avec des éléments saillants portés sur des axes radiaux et ou transversaux.

Ces éléments saillants peuvent être verticaux ou légèrement orientés de manière à augmenter la surface des déchirures opérées sur les capsules. L'eau passera sans problèmes dans la capsule puisque, sous l'effet de la pression d'eau, la membrane supérieure, de nature souple, pourra fléchir légèrement et libérer ainsi les ouvertures réalisées par les éléments saillants.

Ces éléments saillants sont constitués par exemple de pointes tronconiques, d'une hauteur de 2 à 7 mm, et d'un diamètre moyen de 2 à 5 mm, ou de petites lames ou croix, d'une hauteur de 2 à 7 mm, d'une section de 1 à 3 mm, légèrement taillées en crête.

Ces éléments, de préférence au nombre de 3 à 10, sont répartis sur la face inférieure la grille dans la zone correspondant au diamètre intérieur supérieur du corps de la cartouche.

La seconde solution consiste à prévoir le système d'injection d'eau primaire constitué par une grille de répartition d'eau maintenue par tout moyen connu tel qu'une vis et un organe d'injection d'eau secondaire constitué par une pointe d'injection d'eau coaxiale avec les bagues de serrage primaire et secondaire. Cette pointe assure la double fonction de perforation de la face supérieure de la cartouche et d'injection d'eau. Ce système d'injection d'eau peut par exemple être celui faisant en partie l'objet de la demande de brevet européen No. 90114402 du 27 juillet 1990.

L'ouverture de la face inférieure peut être réalisée à l'aide du procédé et une partie du dispositif, objet de la demande de brevet européen No. 91107462.3. Il s'agit, en effet, d'adapter le dispositif constitué d'éléments en relief et en creux placés sur la grille d'écoulement du porte-cartouche. L'ouverture de la face inférieure peut aussi être réalisée avec le dispositif objet des demandes de brevet EP No. 90114401.4 et 90114403.0, c'est-à-dire porte-cartouche comportant à sa partie inférieure un pointeau central avec éventuellement des ailettes radiales.

La couronne circulaire supérieure et moyen de fixation secondaire seront dimensionnées de telle manière qu'ils puissent venir serrer contre le joint de la tête d'extraction sans être gênées par la grille de répartition d'eau ou la tête d'extraction de la machine, sans toutefois laisser trop de volume libre entre elle et la tête d'extraction, ce volume se remplissant d'eau à chaque extraction et pouvant se répandre lors du desserrage du dispositif après extraction de la capsule.

Selon que la capsule est tronconique, hémisphérique ou tronconique inversée, les formes intérieures du porte-cartouche et du moyen de fixation secondaire sont variables pour chacun mais l'association des deux pièces représente toujours un logement intérieur adapté à la capsule.

Si la capsule est tronconique inversée, le porte-cartouche comporte un logement dont la forme est adaptée à la forme extérieure de la cartouche à extraire, le bord supérieur du porte-cartouche appuyant contre le moyen de fixation secondaire sur la périphérie de l'organe d'injection d'eau secondaire. L'étanchéité se fera grâce à la compression du pourtour supérieur de la cartouche entre le rebord supérieur du porte-cartouche et le moyen de fixation secondaire qui peut disposer d'un joint souple dans la zone correspondant avec le rebord de la cartouche.

Si la capsule est tronconique ou hémisphérique, le moyen de fixation secondaire se prolonge sous forme de pièce annulaire creuse pour créer un logement dont la forme épouse la forme extérieure de la cartouche à extraire, la périphérie inférieure de cette pièce appuyant contre la bordure périphérique du fond du logement du porte-cartouche. L'étanchéité lors de l'extraction se fera au niveau du rebord inférieur de la capsule qui sera comprimé entre la partie inférieure de la pièce annulaire creuse et le pourtour du fond du logement du porte-cartouche.

Le moyen de fixation secondaire doit être bloqué dans la machine, une fois mise en place temporairement, afin d'éviter qu'il ne se desserre chaque fois que le porte-cartouche sera lui-même desserré après extraction de la capsule. Ceci peut être obtenu par un ergot muni d'une vis de blocage, monté sur la poignée du moyen de fixation secondaire.

L'invention concerne finalement le moyen de fixation secondaire et l'organe d'injection d'eau secondaire tels que décrits ci-dessus.

La suite de la description est faite en référence aux dessins sur lesquels:
Fig. 1 est une coupe du dispositif selon l'invention pour l'extraction de cartouche tronconique,
Fig. 2 est une coupe du dispositif selon l'invention pour l'extraction de capsule tronconique dans une seconde forme de réalisation et
Fig. 3 est une coupe du dispositif selon l'invention pour l'extraction de capsule tronconique inversée.

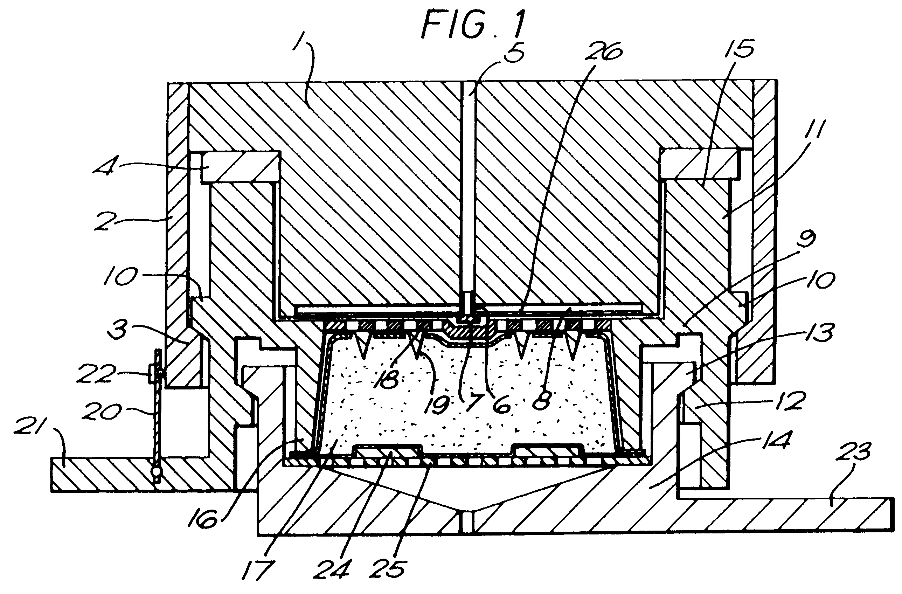

Sur la Fig. 1 on a une tête d'extraction classique (1) de machine type espresso. Elle comporte une bague de serrage (2) avec des rampes de serrage (3). Le joint (4) assure l'étanchéité lors de l'extraction. L'eau arrive par le canal (5) et passe par les orifices (6) de la vis creuse (7) pour se répandre dans la chambre (8).

Le dispositif selon l'invention comprend un moyen de fixation secondaire (9) comportant des pattes de serrage (10) prévues pour s'engager sur les rampes de serrage (3), une bague de serrage secondaire (11) présentant des rampes de serrage (12) sur lesquelles s'engagent les pattes de fixation (13) du porte-cartouche (14) et sur le haut une couronne circulaire (15) appuyant contre le joint d'étanchéité (4). Ce moyen de fixation (9) comprend finalement une pièce annulaire creuse (16) délimitant un logement pour la capsule (17) à extraire et au-dessus de ladite capsule une grille de répartition d'eau (18) avec des éléments saillants (19).

Le moyen de fixation (9) est empêché de tourner grâce à un ergot (20) muni d'une vis de blocage (22), monté sur la poignée (21) du moyen précité. Le porte-cartouche (14) comporte une poignée (23), des éléments saillants (24) et une grille d'écoulement (25), la face inférieure de la cartouche reposant sur lesdits éléments saillants (24).

Le fonctionnement du dispositif est le suivant: on place la cartouche (17) dans le porte-cartouche (14) qu'on engage sur les rampes de serrage (12). Les éléments saillants (19) percent le haut de la capsule. Lors de la mise en marche de l'appareil, l'eau arrive par le canal (5) et se répartit uniformément sur la grille (26), la traverse et pénètre dans la capsule par les orifices opérés par les éléments saillants (19). On a une montée en pression dans la cartouche et la face inférieure de ladite cartouche appuie sur les éléments saillants (24) jusqu'à atteindre sa tension de rupture. Le café s'écoule alors à travers la grille (25) et est récupéré dans un récipient non représenté. L'étanchéité est garantie par le pincement du pourtour de la partie inférieure de la capsule entre l'arête de la pièce annulaire creuse (16) et la périphérie du fond du logement du porte-cartouche (14).

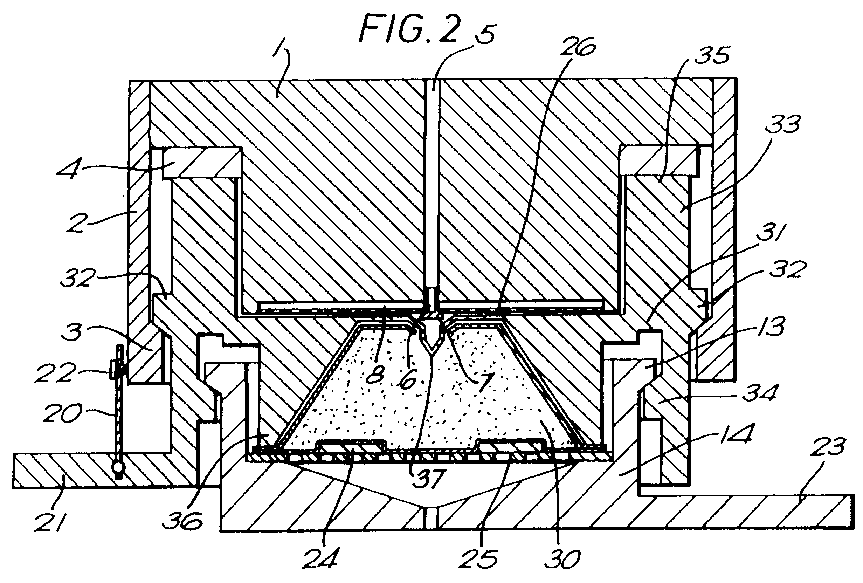

Sur la Fig. 2, on a noté avec les mêmes références les éléments identiques de la Fig. 1. La cartouche (30) à extraire est différente. La tête d'extraction (1) est identique à celle de la Fig. 1, de même que le porte-cartouche (14). Le moyen de fixation secondaire (31) est différent. Il comporte des pattes de serrage (32) prévues pour s'engager sur les rampes de serrage (3), une bague de serrage secondaire (33) présentant des rampes de serrage (34) sur lesquelles s'engagent les pattes de fixation (13) du porte-cartouche (14) et sur le haut une couronne circulaire (35) appuyant contre le joint d'étanchéité (4). Ce moyen de fixation (31) comprend finalement une pièce annulaire creuse délimitant un logement pour la capsule (30) à extraire. La différence fondamentale avec la Fig. 1 réside dans la présence de la pointe d'injection d'eau (37) pour l'arrivée d'eau. Cette pointe perce le haut de la capsule et l'eau arrive par des orifices pratiqués dans ladite pointe pour pénétrer la cartouche (30) à extraire. Par ailleurs, le fonctionnement du dispositif est le même que celui de la Fig. 1.

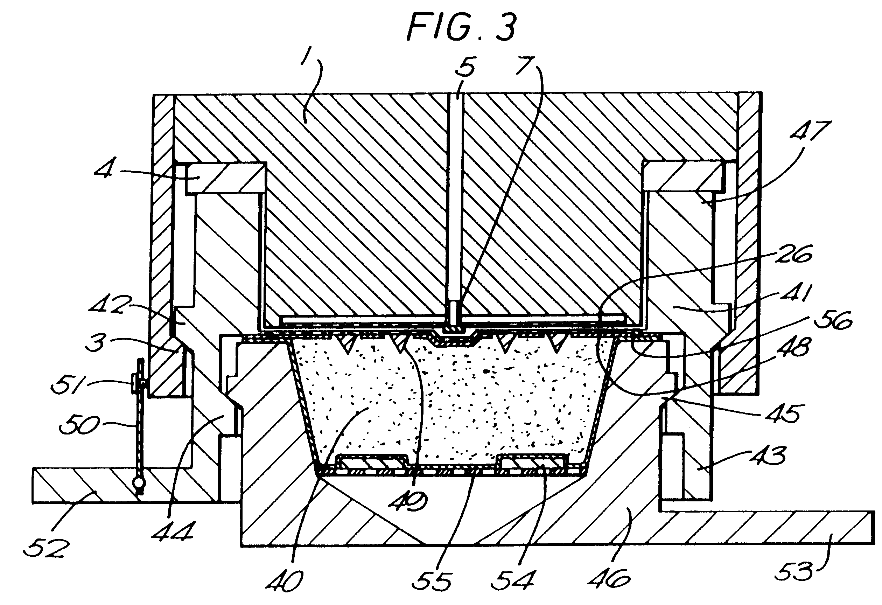

Le dispositif de la Fig. 3 permet d'extraire une capsule tronconique inversée. Les éléments identiques de la Fig. 1 ont été affectés du même no. de référence. La tête d'extraction (1) est la même que pour les Fig. 1 et 2. Le moyen de fixation secondaire (41) comporte des pattes de serrage (42) prévues pour s'engager sur les rampes de serrage (3), une bague de serrage secondaire (43) présentant des rampes de serrage (44) sur lesquelles s'engagent les pattes de fixation (45) du porte-cartouche (46) et sur le haut une couronne circulaire (47) appuyant contre le joint d'étanchéité (4). Ce moyen de fixation comprend finalement sous la grille de répartition d'eau (26) de la tête d'extraction une seconde grille de répartition d'eau (48) avec des éléments saillants (49). Le moyen de fixation (41) est empêché de tourner grâce à un ergot (50) muni d'une vis de blocage (51), monté sur la poignée (52) du moyen précité. Le porte-cartouche (46) comporte une poignée (53), des éléments saillants (54) et une grille d'écoulement (55), la face inférieure de la cartouche reposant sur lesdits éléments saillants (54). Pour l'extraction, l'étanchéité du système est assurée sur la périphérie du bord supérieur de la capsule à extraire (40), grâce à un joint (56) solidaire du moyen (41). Le fonctionnement du dispositif est le même que celui de la Fig. 1.

## Revendications

1. Dispositif destiné à être utilisé dans une machine à café espresso du type classique pour permettre l'extraction de cartouches fermées contenant une substance pour la préparation d'une boisson et prévu pour être monté sur la tête d'extraction de la machine comprenant un système d'injection d'eau primaire, le dispositif étant constitué par une grille de répartition d'eau (26), une bague de serrage primaire (2) avec des rampes de serrage (3) coaxiales avec le système d'injection d'eau et un joint d'étanchéité (4) entourant le système d'injection d'eau et éventuellement surélevé par rapport à celui-ci, comprenant en outre un organe d'injection d'eau secondaire (18) disposé sous le système d'injection d'eau primaire et constitué par une grille de répartition d'eau avec des éléments saillants (19), par une simple ouverture avec des éléments saillants portés par des axes radiaux ou transversaux ou par une pointe d'injection d'eau (37) coaxiale avec les bagues de serrage primaire et secondaire, un moyen de fixation secondaire (9, 31, 41) et un porte-cartouche (14, 46), ledit moyen de fixation secondaire comportant sur l'extérieur des pattes de serrage (10, 32) prévues pour s'engager sur les rampes de serrage (3) de la bague de serrage primaire, sur l'intérieur une bague de serrage secondaire présentant des rampes de serrage (12, 34) sur lesquelles s'engagent les pattes de fixation (13) du porte-cartouche et sur le haut une couronne circulaire (15, 47) s'appuyant contre le joint d'étanchéité (4), le moyen de fixation secondaire et le porte-cartouche ménageant entre eux une cavité destinée à recevoir la cartouche à extraire, cette cavité étant intégralement assurée par l'une ou l'autre pièce et l'étanchéité étant assurée soit sur le rebord de la face supérieure, soit sur le rebord de la face inférieure de ladite cartouche, le porte-cartouche comportant sur sa partie inférieure des éléments en relief (24, 54) et en creux sur une grille d'écoulement ou un pointeau central avec éventuellement des ailettes radiales.

2. Dispositif selon la revendication 1, pour l'extraction d'une capsule tronconique inversée (40), et capsule troncoconique caractérisé en ce que le porte-cartouche (46) comporte un logement dont la forme est adaptée à la forme extérieure de la cartouche à extraire, le bord supérieur du porte-cartouche appuyant contre le moyen de fixation secondaire sur la périphérie de l'organe d'injection d'eau secondaire.

3. Dispositif selon la revendication 1, pour l'extraction d'une capsule tronconique ou hémisphérique (17), et capsule caractérisé en ce que le moyen de fixation secondaire (9) se prolonge sous forme de pièce annulaire creuse pour créer un logement dont la forme épouse la forme extérieure de la cartouche à extraire, la périphérie inférieure de cette pièce appuyant contre la bordure périphérique du fond du logement du porte-cartouche.

## Claims

1. A device intended for use in an espresso coffee machine of the conventional type for the extraction of sealed cartridges containing a substance for the preparation of a beverage and designed to be fitted to the extraction head of the machine comprising a primary water injection system, the device being formed by a water distributing grill (26), a primary retaining collar (2) with retaining ramps (3) coaxial with the water injection system and a seal (4) surrounding, and optionally raised in relation to, the water injection system and additionally comprising a secondary water injector (18) arranged beneath the primary water injection system and formed by a water distributing grill with projecting elements (19), by a single opening with projecting element supported by radial or transverse pins or by a water injection needle (37) coaxial with the primary and secondary retaining collars, secondary fixing means (9,31,41) and a cartridge holder (14,46), the secondary fixing means comprising on the outside retaining flanges (10,23) designed to engage the retaining ramps (3) of the primary retaining collar, on the inside a secondary retaining collar having retaining ramps (12,34) engaged by the fixing flanges (13) of the cartridge holder and, on top, a circular ring (15,47) bearing against the seal (4), the secondary fixing means and the cartridge holder between them forming a cavity intended to receive the cartridge to be extracted, this cavity being integrally defined by one or the other component and fluid-tightness being ensured either on the rim of the upper face or on the rim of the lower face of the cartridge, the cartridge holder on its lower part comprising relief and recessed elements (24,54) on a flow grill or a central needle with, optionally, radial fins.

2. A device as claimed in claim 1 for the extraction of an inverted frustum capsule (4) and a frustoconical capsule, characterized in that the cartridge holder (46) comprises a recess adapted in shape to the external form of the cartridge to be extracted, the upper edge of the cartridge holder bearing against the secondary fixing means on the periphery of the secondary water injector.

3. A device as claimed in claim 1 for the extraction of frustoconical or hemispherical capsules (17) and capsule, characterized in that the secondary fixing means (9) is extended in the form of a hollow annular element to create a recess of which the shape follows the external form of the cartridge to be extracted, the lower periphery of this element bearing against the peripheral border of the base of the recess of the cartridge holder.

## Patentansprüche

1. Vorrichtung, die dazu bestimmt ist, in einer Espresso-Kaffeemaschine bekannten Typs verwendet zu werden, um die Extraktion von geschlossenen Portionspackungen, die eine Substanz zur Zubereitung eines Getränks enthalten, und vorgesehen ist, um auf dem ein primäres Wassereinspritzsystem aufweisenden Extraktionskopf der Maschine montiert zu werden, wobei diese Vorrichtung aus einem Wasserverteilungsrost (26), einem primären Klemmring (2) mit zu dem Wassereinspritzsystem koaxialen Klemmrampen (3) und einem Dichtring (4) besteht, der das Wassereinspritzsystem umgibt und ggf. bezüglich diesem erhöht ist, und außerdem ein unter dem primären Wassereinspritzsystem angeordnetes sekundäres Wassereinspritzorgan (18), das aus einem Wasserverteilungsrost mit vorspringenden Elementen (19), aus einer einfachen Öffnung mit vorspringenden Elementen, die von radialen oder querverlaufenden Achsen getragen sind, oder aus einer zum primären und zum sekundären Klemmring koaxialen Wassereinspritzspitze (37) bestehen, ein sekundäres Befestigungsmittel (9, 31, 41) und einen Portionspackungsträger (14, 46) aufweist, wobei dieses sekundäre Befestigungsmittel außen Klemmlappen (10, 32), die vorgesehen sind, um auf die Klemmrampen (3) des primären Klemmrings zu gelangen, innen einen sekundären Klemmring mit Klemmrampen (12, 34), auf die die Befestigungslappen (13) des Portionspackungsträgers gelangen, und oben einen kreisförmigen Kranz (15, 47) aufweist, der an dem Dichtring (4) anliegt, wobei das sekundäre Befestigungsmittel und der Portionspackungsträger zwischen sich einen Hohlraum bilden, der zur Aufnahme der zu extrahierenden Portionspackung bestimmt ist und der vollständig durch das eine oder das andere Teil gewährleistet wird, wobei die Abdichtung entweder am abgewinkelten Rand der Oberseite oder am abgewinkelten Rand der Unterseite der Portionspackung gewährleistet ist und der Portionspackungsträger in seinem unteren Teil erhabene Elemente (24, 54) und vertiefte Elemente auf einem Ablaufrost oder eine zentrale Nadel ggf. mit radialen Rippen aufweist.

2. Vorrichtung nach Anspruch 1 zur Extraktion einer umgekehrt kegelstumpfförmigen Portionspackung (40) und kegelstumpfförmige Portionspackung, dadurch gekennzeichnet, daß der Portionspackungsträger (46) eine Aufnahme aufweist, deren Form an die Außenform der zu extrahierenden Portionspackung angepaßt ist, wobei der obere Rand des Portionspackungsträgers sich am Umfang des sekundären Wassereinspritzorgans an dem sekundären Befestigungsmittel abstützt.

3. Vorrichtung nach Anspruch 1 für die Extraktion einer kegelstumpfförmigen oder halbkugelförmigen Portionspackung (17) und Portionspackung, dadurch gekennzeichnet, daß das sekundäre Befestigungsmittel (9) in Form eines ringförmigen hohlen Teils verlängert ist, um eine Aufnahme zu schaffen, deren Form sich an die Außenform der zu extrahierenden Portionspackung anschmiegt, wobei der untere Umfang dieses Teils sich an dem Umfangsrand des Bodens der Aufnahme des Portionspackungsträgers abstützt.
